# FASCICULE DE BREVET EUROPEEN

(11) **EP 2 242 670 B1**
(45) Date de publication et mention de la délivrance du brevet: **17.10.2018**
(21) Numéro de dépôt: 09703851.7
(22) Date de dépôt: 16.01.2009
(51) Int. Cl.: B60S 1/38

(54) **LAME D'ESSUYAGE D'UN BALAI D'ESSUIE-GLACE ET PROCEDE DE REALISATION**
WISCHBLATT FÜR SCHEIBENWISCHER UND HERSTELLUNGSVERFAHREN DAFÜR
WIPING BLADE FOR WIPER AND METHOD FOR MAKING SAME

(30) Priorité: 18.01.2008 FR 0800260
(43) Date de publication de la demande: 27.10.2010
(73) Titulaire: Valeo Systèmes d'Essuyage, 78322 Le Mesnil Saint Denis (FR)
(72) Inventeur: PETITET, Gilles, 63500 Issoire (FR)
(74) Mandataire: Callu-Danseux, Violaine
(86) Numéro de dépôt international: PCT/EP2009/050484
(87) Numéro de publication internationale: WO 2009/092667

(56) Documents cités:
- JP-A- 7 069 176
- JP-A- 8 268 236
- JP-A- S6 189 152
- JP-A- 60 226 343
- US-A- 3 192 551
- US-B1- 6 836 925

## Description

La présente invention concerne une lame d'essuyage de balai d'essuie-glace. Elle concerne également un procédé de réalisation d'une telle lame d'essuyage.

L'invention trouve une application particulièrement avantageuse dans le domaine des systèmes d'essuyage pour véhicules automobiles, et plus spécialement dans celui des systèmes d'essuyage comprenant des balais d'essuie-glace plats.

Actuellement, la majorité des balais d'essuie-glace utilisés sont des balais dits droits, comportant une structure à palonniers (comme par example le balai d'essuie-glace décrit par le document JPS6189152 A).

Ce type de balai d'essuie-glace est peu à peu remplacé par une nouvelle génération de balais dits « plats », connus également sous le terme de « Flat Blade », qui présentent la particularité de ne plus comporter de structure à palonniers (comme par example le balai d'essuie-glace décrit par le document US6836925 B1). Les balais d'essuie-glace plats comprennent toujours une lame d'essuyage souple, généralement en élastomère, mais avec la différence que l'armature externe chargée de la supporter est ici remplacée par une structure flexible à laquelle la lame est directement intégrée. Le profil de la lame conserve une section constante d'une extrémité à l'autre de la structure de balai.

Un objectif de la technologie de balai plat « Flat blade » est d'obtenir une répartition la plus homogène possible de la force linéique appliquée sur le pare-brise du véhicule, le long de la lame d'essuyage, cette dernière étant soumise en son centre, ou en deux autres points, à une force d'appui exercée par le bras d'entraînement du système d'essuyage sur le connecteur reliant le bras à la lame.

On entend ici par « force linéique » la force exercée par unité de longueur de lame ; elle s'exprime en N/m.

Cependant, cet objectif n'est pas toujours atteint puisqu'on observe en général que la force linéique sur le pare-brise ne reste pas constante le long de la lame, ceci principalement pour trois raisons :
- le galbe du pare-brise ne correspond pas partout à celui pour lequel a été conçue la tige métallique de rigidification, ou vertèbre, de la structure flexible portant la lame d'essuyage. En effet, le dimensionnement du profil de la tige de rigidification est effectué pour un rayon de courbure moyen du galbe, or un pare-brise peut présenter des variations de galbe importantes. C'est le cas notamment des extrémités de la zone d'essuyage qui souvent ne sont pas couvertes correctement du côté passager, ce qui laisse une surface du pare-brise en situation de manque d'essuyage ;
- pour compenser le soulèvement aérodynamique du bras, un effort supérieur à celui qui serait strictement requis est appliqué sur le balai au niveau du connecteur central de liaison avec le bras. Il en résulte que la lame subit une surpression dans sa partie située sous le connecteur ;
- pour atteindre de bonnes performances aérodynamiques, une tête inclinée liée à l'axe de sortie du moteur d'entraînement du bras est disposée sur le porte-balai, avec pour conséquence une dissymétrie des efforts entre le sens de balayage montant et le sens de balayage descendant. On observe en effet qu'au niveau du connecteur la lame subit une force plus grande dans le sens descendant que dans le sens montant.

Ces variations de la force linéique ont pour conséquence un dimensionnement non optimal le long de la lame de grandeurs fonctionnelles, telles que l'angle de calage, l'angle de raclage, etc. Il en résulte une limitation des performances du balai d'essuie-glace en termes par exemple de qualité d'essuyage, d'usure et de bruit.

Aussi, un but de l'invention est de proposer une lame d'essuyage de balai d'essuie-glace, qui permettrait de prendre en compte les variations de la force linéique le long de la lame de manière à obtenir un dimensionnement optimisé desdites grandeurs fonctionnelles et, ainsi, améliorer les performances du balai.

Ce but est atteint, conformément à l'invention, grâce à un balai d'essuie-glace plat selon la revendication 1.

Ainsi, du fait de la prise en compte par le profil de rigidité variable de la lame des variations de la force linéique, on obtient des grandeurs fonctionnelles, angle de calage et angle de raclage notamment, plus homogènes sur le pare-brise permettant d'assurer un meilleur fonctionnement du balai en essuyage, usure, bruit, etc.

Selon l'invention, ledit profil de rigidité variable est un profil de section variable. En particulier, ladite lame comportant un élément de contact avec ledit pare-brise, relié à un talon par une charnière, ledit profil de section variable concerne des caractéristiques dimensionnelles dudit élément de contact et/ou de ladite charnière et/ou dudit talon.

L'invention concerne également un procédé de réalisation d'une lame d'essuyage de balai d'essuie-glace tel que défini ci-dessus, remarquable en ce que ledit procédé comprend une étape de détermination d'un profil de rigidité variable consistant à :
- définir une pluralité de zones caractéristiques des variations le long de la lame de la force linéique devant être appliquée par ladite lame sur le pare-brise,
- déterminer une longueur pour chaque zone caractéristique,
- établir dans chaque zone caractéristique une plage de variations de ladite force linéique,
- déterminer, à l'intérieur de chaque zone caractéristique, un profil de référence de la lame, présentant une rigidité compatible au moins partiellement avec ladite plage de variations,
- relier les profils de référence desdites zones caractéristiques selon une loi de raccordement continue.

Selon l'invention, lesdits profils de référence sont des profils définis par des caractéristiques dimensionnelles de la section de la lame. En particulier, ladite lame comportant un élément de contact avec ledit pare-brise, relié à un talon par une charnière, lesdites caractéristiques dimensionnelles concernent ledit élément de contact et/ou ladite charnière et/ou ledit talon.

Selon un mode de réalisation, ladite loi de raccordement continue est une loi linéaire.

Selon un autre mode de réalisation, ladite loi de raccordement continue est une loi de Timoshenko issue d'un modèle de poutre sur fondation élastique.

La description qui va suivre en regard des dessins annexés, donnés à titre d'exemples non limitatifs, fera bien comprendre en quoi consiste l'invention et comment elle peut être réalisée.

La figure 1a est un graphe montrant une répartition typique de la force linéique appliquée à un pare-brise par une lame d'essuyage d'un balai d'essuie-glace plat pour une force de bras d'entraînement supérieure à la force de définition du balai.

La figure 1b est un graphe montrant une répartition typique de la force linéique appliquée à un pare-brise par une lame d'essuyage d'un balai d'essuie-glace plat pour une force de bras d'entraînement inférieure à la force de définition du balai.

La figure 2 est un graphe donnant la répartition statistique de la longueur normalisée des zones caractéristiques définies sur la figure 1, pour différents balais d'essuie-glace.

La figure 3 montre des exemples de profil de référence à appliquer aux zones caractéristiques définies sur la figure 1.

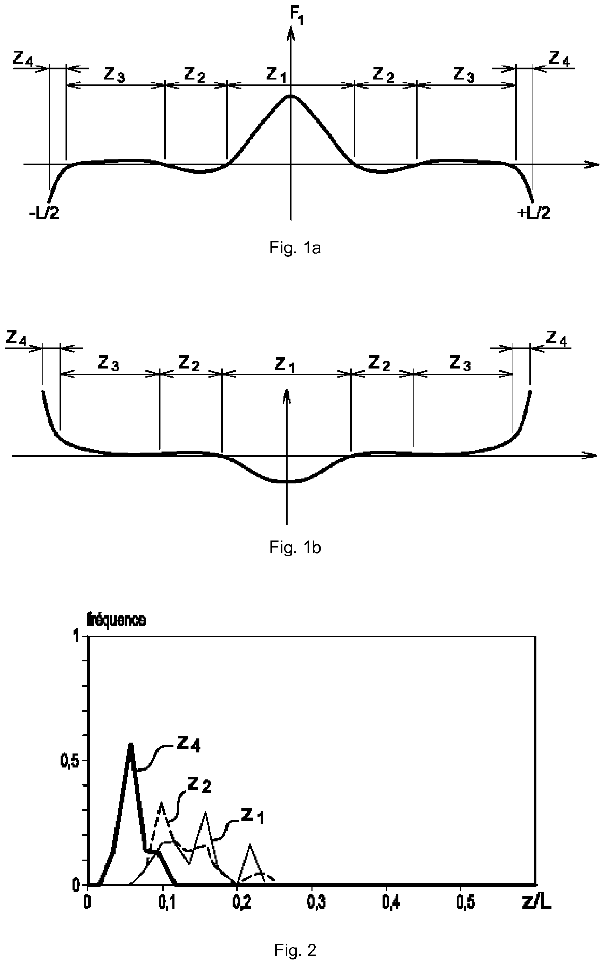

Sur la figure 1a est représenté un graphe illustrant les variations typiques de la force linéique Fₗ appliquée sur un balai de longueur L par une lame d'essuyage d'un essuie-glace relevant de la technologie « Flat blade », lorsqu'un bras d'entraînement du système d'essuyage exerce une force d'appui sur un connecteur central du balai reliant le bras d'entraînement à la lame, supérieure à la force ayant permis de définir le balai. Cette force de définition du balai est celle pour laquelle la répartition de la force linéique Fₗ est constante.

La figure 1b est un graphe équivalent dans la situation inverse où le bras d'entraînement du système d'essuyage exerce une force d'appui inférieure à la force de définition du balai.

Bien entendu, des graphes similaires pourraient être construits dans le cas où la force d'appui serait transmise au balai en deux points d'application ou plus.

On voit sur les exemples des figures 1a et 1b qu'il est possible de définir le long du balai plusieurs zones caractéristiques, ici quatre zones notées Z₁, Z₂, Z₃ et Z₄. Bien entendu, en fonction de l'allure des variations de force linéique observées, il sera possible de définir un nombre de zones caractéristiques différentes de quatre, les exemples des figures 1a et 1b n'étant que des cas particuliers de mise en oeuvre d'un procédé de portée plus générale.

De manière pratique, les différentes zones sont définies par rapport à l'axe horizontal correspondant à la valeur de la force linéique Fₗ pour laquelle a été calculé le balai. Dans la plupart des cas, il s'agit de la valeur moyenne de l'effort sous le balai

Concernant le graphe de la figure 1a par exemple, la zone Z₁ est celle où la force linéique Fₗ présente la valeur la plus grande, conséquence du fait que c'est la zone située à proximité immédiate du connecteur central sur lequel s'exerce la force d'appui développée par le bras d'entraînement. La force linéique Fₗ décroît ensuite assez fortement à mesure qu'on s'éloigne du centre de la lame. Au niveau de la première intersection du graphe avec l'axe horizontal, on peut définir la fin de la zone Z₁ et le début de la zone Z₂, laquelle est une zone de relaxation de charge où la force linéique est plus faible jusqu'à atteindre un nouveau point d'intersection qui peut être choisi pour marquer la limite entre la zone Z₂ et une zone Z₃ dans laquelle la force Fₗ prend des valeurs intermédiaires. La force linéique Fₗ décroît ensuite fortement à partir d'une troisième intersection définissant, par exemple, la frontière entre la zone Z₃ et une zone Z₄ à l'extrémité de laquelle la force linéique décroît vers zéro.

Il en est de même symétriquement pour le graphe de la figure 1b.

On va maintenant déterminer une longueur moyenne pour chaque zone caractéristique. Cette détermination est effectuée de manière statistique, étant entendu qu'une même lame d'essuyage résultant du procédé de dimensionnement que l'on décrit maintenant doit convenir aussi bien à des balais d'essuie-glace de toutes longueurs, qu'à des pare-brises de géométrie différente, ou à des forces d'appui appliquées variables, etc.

Dans ce but, on constitue une base de données regroupant les longueurs des zones caractéristiques et les valeurs de la force linéique extraites d'un grand nombre de graphes, analogue à celui de la figure 1, établis soit à partir de modèles théoriques issus d'un calcul d'éléments finis ou autres méthodes de calcul, soit de mesures réelles effectuées sur des balais d'essuie-glace existants. Dans tous les cas, la lame d'essuyage est supposée présenter un profil de section constante.

La base de données étant ainsi constituée, on peut construire le graphe de la figure 2 qui donne pour chacune des zones caractéristiques Z₁, Z₂ et Z₄ la fréquence normalisée d'une longueur de zone normalisée à la longueur L du balai, comprise entre x et x+Δx, x étant la variable portée en abscisses sur la figure 2. En d'autres termes, on compte le nombre d'occurrences dans la base de données d'une valeur de longueur normalisée comprise entre x et x+Δx (Δx=0,02 par exemple) pour une zone caractéristique donnée, puis on divise le nombre d'occurrences ainsi obtenues par le nombre total des données disponibles correspondantes. Le résultat de ce calcul constitue la fréquence portée en ordonnées sur la figure 2.

On peut ainsi déduire de graphes du type de celui de la figure 2 un intervalle de variations de la longueur de chaque zone et une longueur statistique moyenne correspondante. Par exemple, si L représente la longueur totale de balai :
Z₁ varie entre 0,04 L et 0,11 L avec une moyenne de 0,08 L
Z₂ varie entre 0,08 L et 0,24 L avec une moyenne de 0,16 L
Z₄ varie entre 0,04 L et 0,10 L avec une moyenne de 0,07 L ou valeur fixe de 45 mm

La longueur de la zone Z₃ se déduit de celles des autres zones par complément à la longueur totale L de la lame.

Pour la zone Z₄, il est possible de choisir une longueur fixe car les balais de faible longueur étant le plus souvent situés du côté passager, il est observé que la variation de galbe du pare-brise est plus importante du côté passager que du côté conducteur. Ce premier côté est ainsi plus difficile à couvrir. Ainsi, la zone non essuyée en bout de balai a tendance à augmenter par rapport à la longueur totale de celui-ci, d'où l'intérêt de définir une longueur constante pour la zone Z₄.

Ensuite, toujours à partir des données statistiques enregistrées dans la base, on peut établir pour chaque zone une plage de variations de la force linéique Fₗ. Par exemple :
Z₁ : 6 à 50 N/m
Z₂ : 5 à 26 N/m
Z₃ : 6 à 34 N/m
Z₄ : 0 à 50 N/m

On comprend sur ces chiffres qu'il n'est pas possible de concevoir une lame à profil constant qui pourrait accepter l'amplitude totale des variations observées sans risquer de nuire aux autres performances.

Ainsi, pour la zone Z₁, il est nécessaire de concevoir un profil très rigide acceptant les fortes variations de charge. C'est en effet la zone centrale des balais de technologie « Flat blade » qui supporte en général les plus grandes variations de la force d'appui.

Par contre, la zone Z₂ peut être dimensionnée de manière à fonctionner sous des conditions de charge plus faibles. C'est ce qu'on observe parfois dans cette zone à travers la présence de stries de part et d'autre du connecteur central, signalant effectivement une force linéique plus faible qu'ailleurs.

La zone Z₃ montre des conditions de charge intermédiaires.

La zone Z₄ subit des variations de charge extrêmement élevées. En pratique, il peut être très difficile de couvrir entièrement une telle zone. Comme, dans cette zone, ce sont les secteurs de sous-pression qui soulèvent le plus de problèmes car ils ne sont pas essuyés, il y a avantage à privilégier les faibles charges, et donc un meilleur suivi de galbe, pour réaliser le dimensionnement de la zone Z₄.

Il résulte de la discussion qui précède qu'un moyen de concilier les exigences de chaque zone en matière de charge consiste à donner à la lame d'essuyage un profil de rigidité variable en relation avec les variations de la force linéique observées de long de la lame.

Ledit profil de rigidité variable peut être réalisé sous la forme d'un profil de section variable dimensionné pour obtenir la rigidité désirée.

Concrètement, on définit pour chaque zone, un profil de référence dont la section présente la rigidité recherchée, puis on relie les différents profils de référence par une loi de raccordement continue.

A titre d'exemple, les zones de référence des zones Z₁, Z₂, et Z₃ sont définies au centre de la zone respective, tandis que pour la zone Z₄ le profil de référence est défini en extrémité du balai.

La loi de raccordement continue peut être une loi linéaire. Mais on peut choisir aussi une loi de variation du profil en accord avec la variation de la force linéique du balai, ceci pour une meilleure adéquation entre la géométrie du profil et la répartition de la force sous le balai. Une telle loi de variation est issue par exemple du modèle de poutre sur une fondation élastique de Timoshenko. Cette loi est de la forme f(x) = A.e^{-kx}.(cos(k.x) + sin(k.x)).

La lame d'essuyage conforme à l'invention est fabriquée de préférence par moulage d'un élastomère, ce procédé étant particulièrement bien adapté à la réalisation d'un profil à section variable.

Pour obtenir un profil de section variable présentant une rigidité donnée, on peut agir sur les caractéristiques dimensionnelles de la lame d'essuyage, en particulier l'élément de contact avec le pare-brise, appelé aussi « sapin » compte tenu de sa forme généralement triangulaire, et la charnière qui relie l'élément de contact au talon de la lame, lequel est engagé dans un support plastique qui s'étend le long de la lame.

On va maintenant montrer sur un exemple comment ces caractéristiques dimensionnelles peuvent être modifiées.

En reprenant les plages de variations de la force linéique pour les différentes zones caractéristiques Z₁, Z₂ et Z₃ précédemment définies, et en appliquant pour ces zones les forces linéiques nominales de définition généralement observées de 17,2, 11,2 et 14,2 N/m respectivement, on constate que pour la zone Z₁, la force linéique varie de 35% à 290% de sa force nominale de définition. Pour la zone Z₂, cet intervalle varie de 45% à 230%, et de 42% à 240% pour la zone Z₃.

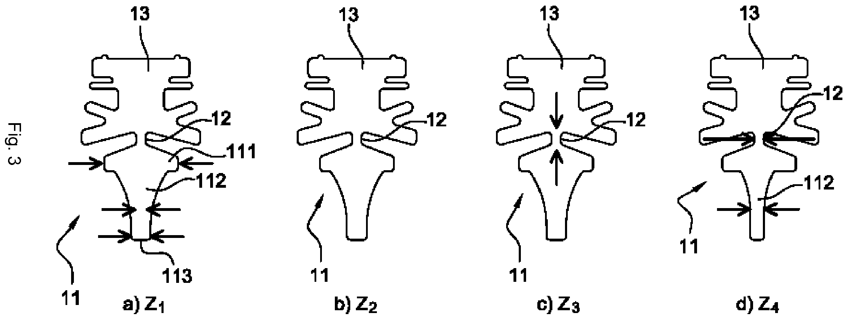

Actuellement, les profils courants en production acceptent en général des variations de 42% à 240% de la force nominale de définition. Ce type de profil standard peut donc être appliqué à la zone Z₃ sans modification pour constituer le profil de référence de cette zone. On peut également utiliser ce même profil comme base à partir de laquelle les caractéristiques dimensionnelles de l'élément de contact et de la charnière doivent être modifiées afin d'obtenir le profil de référence des autres zones. C'est ce que montre la figure 3.

Pour la zone Z₁ dont on a vu plus haut qu'elle devait présenter un profil plus rigide et accepter de fortes variations de la force linéique, il est proposé, par rapport au profil de base de la figure 3 en c), d'élargir les épaules 111 du sapin 11 et d'en épaissir le corps 112 et la lèvre 113, comme le montre la figure 3 en a).

Pour la zone Z₂ qui peut accepter des charges plus faibles, une modification possible est un allongement de la charnière 12 avec le talon 13, conformément à la figure 3 en b).

Enfin, pour la zone Z₄, la figure 3 en d) montre que l'on peut rétrécir le corps 112 du sapin 11 pour obtenir un profil acceptant les faibles charges et permettant d'essuyer les zones galbées du pare-brise grâce à une meilleure flexibilité conférée à la lame. En toute extrémité de zone, c'est-à-dire en bout du balai, on peut prévoir d'épaissir la charnière 12 afin d'éviter le déchirement de la lame à cet endroit. Cette région de renforcement de la charnière peut être considérée comme un cinquième zone définie dans la zone Z₄.

Il est également possible d'agir sur les caractéristiques du talon 13 pour obtenir la rigidité souhaitée.

On observera que le profil n'étant pas dimensionné de manière uniforme sur toute la longueur de la lame, des contraintes peuvent être libérées, ce qui permet d'avoir plus de degrés de liberté pour la conception du profil par rapport à d'autres contraintes, comme le bruit par exemple.

## Revendications

1. Balai d'essuie-glace plat comprenant un connecteur central et une structure flexible comportant une tige métallique de rigidification et portant une lame d'essuyage, ladite lame étant destinée à être soumise à une force d'appui contre un pare-brise de véhicule, **caractérisé en ce que** ladite lame présente un profil de rigidité variable comprenant une pluralités de zones caractéristiques (Z₁, Z₂, Z₃, Z₄), ledit profil de rigidité variable étant en relation avec les variations le long de la lame de la force linéique (Fₗ) devant être appliquée par la lame sur ledit pare-brise, une zone (Z₁) étant celle où la force linéique (Fₗ) présente la valeur la plus grande, ladite zone (Z₁) étant située à proximité immédiate du connecteur central sur lequel peut s'exercer une force d'appui développée par un bras d'entraînement.

2. Balai d'essuie-glace plat selon la revendication 1, dans laquelle ledit profil de rigidité variable est un profil de section variable.

3. Balai d'essuie-glace plat selon la revendication 2, dans laquelle, ladite lame comportant un élément (11) de contact avec ledit pare-brise, relié à un talon (13) par une charnière (12), ledit profil de section variable concerne des caractéristiques dimensionnelles dudit élément (11) de contact et/ou de ladite charnière (12) et/ou dudit talon (13).

4. Procédé de réalisation d'une lame d'essuyage de balai d'essuie-glace tel que défini dans l'une quelconque des revendications précédentes, **caractérisé en ce que** ledit procédé comprend une étape de détermination d'un profil de rigidité variable consistant à :
- définir une pluralité de zones caractéristiques (Z₁, Z₂, Z₃, Z₄) des variations le long de la lame de la force linéique (Fₗ) devant être appliquée par ladite lame sur le pare-brise, une zone (Z₁) étant celle où la force linéique (Fₗ) présente la valeur la plus grande, ladite zone (Z₁) étant située à proximité immédiate d'un connecteur central sur lequel peut s'exercer une force d'appui développée par un bras d'entraînement,
- déterminer une longueur pour chaque zone caractéristique,
- établir dans chaque zone caractéristique une plage de variations de ladite force linéique (Fₗ),
- déterminer, à l'intérieur de chaque zone caractéristique, un profil de référence de la lame, présentant une rigidité compatible au moins partiellement avec ladite plage de variations,
- relier les profils de référence desdites zones caractéristiques (Z₁, Z₂, Z₃, Z₄) selon une loi de raccordement continue.

5. Procédé selon la revendication 4, dans lequel lesdits profils de référence sont des profils définis par des caractéristiques dimensionnelles de la section de la lame.

6. Procédé selon la revendication 5, dans lequel, ladite lame comportant un élément (11) de contact avec ledit pare-brise, relié à un talon (13) par une charnière (12), lesdites caractéristiques dimensionnelles concernent ledit élément (11) de contact et/ou ladite charnière (12) et/ou ledit talon (13).

7. Procédé selon l'une quelconque des revendications 4 à 6, dans lequel ladite loi de raccordement continue est une loi linéaire.

8. Procédé selon l'une quelconque des revendications 4 à 6, dans lequel ladite loi de raccordement continue est une loi de Timoshenko issue d'un modèle de poutre sur fondation élastique.

## Patentansprüche

1. Flacher Scheibenwischer, umfassend einen zentralen Verbinder und eine flexible Struktur, die eine metallische Versteifungsstange aufweist und ein Wischblatt trägt, wobei das Blatt bestimmt ist, einer Andrückkraft gegen eine Windschutzscheibe eines Fahrzeugs ausgesetzt zu sein, **dadurch gekennzeichnet, dass** das Blatt ein Profil variabler Steifigkeit aufweist, umfassend eine Vielzahl charakteristischer Zonen (Z₁, Z₂, Z₃, Z₄), wobei das Profil variabler Steifigkeit mit den Variationen, entlang des Blatts, der linearen Kraft (Fₗ), die von dem Blatt auf die Windschutzscheibe ausgeübt werden muss, in Beziehung steht,
wobei eine Zone (Z₁) diejenige ist, wo die lineare Kraft (Fₗ) den höchsten Wert aufweist, wobei sich die Zone (Z₁) in unmittelbarer Nähe des zentralen Verbinders befindet, auf welchen eine von einem Antriebsarm entwickelte Andrückkraft ausübbar ist.

2. Flacher Scheibenwischer nach Anspruch 1, wobei das Profil variabler Steifigkeit ein Profil mit variablem Querschnitt ist.

3. Flacher Scheibenwischer nach Anspruch 2, wobei, wobei das Blatt ein Kontaktelement (11) mit der Windschutzscheibe aufweist, das mittels eines Scharniers (12) mit einem Absatz (13) verbunden ist, das Profil variablen Querschnitts Dimensionsmerkmale des Kontaktelements (11) und/oder des Scharniers (12) und/oder des Absatzes (13) betrifft.

4. Verfahren zur Herstellung eines Scheibenwischer-Wischblatts nach einem der vorangehenden Ansprüche, **dadurch gekennzeichnet, dass** das Verfahren einen Bestimmungsschritt eines Profils variabler Steifigkeit umfasst, bestehend aus:
- Festlegen einer Vielzahl charakteristischer Zonen (Z₁, Z₂, Z₃, Z₄) der Variationen, entlang des Blatts, der linearen Kraft (Fₗ), die von dem Blatt auf die Windschutzscheibe ausgeübt werden muss, wobei eine Zone (Z₁) diejenige ist, wo die lineare Kraft (Fₗ) den höchsten Wert aufweist, wobei sich die Zone (Z₁) in unmittelbarer Nähe eines zentralen Verbinders befindet, auf welchen eine von einem Antriebsarm entwickelte Andrückkraft ausübbar ist,
- Bestimmen einer Länge für jede charakteristische Zone,
- Einrichten, in jeder charakteristischen Zone, eines Variationsbereichs der linearen Kraft (Fₗ),
- Bestimmen, innerhalb jeder charakteristischen Zone, eines Referenzprofils des Blatts, das eine Steifigkeit aufweist, die mindestens teilweise mit dem Variationsbereich kompatibel ist,
- Verbinden der Referenzprofile der charakteristischen Zonen (Z₁, Z₂, Z₃, Z₄) gemäß einem kontinuierlichen Anschlussgesetz.

5. Verfahren nach Anspruch 4, wobei die Referenzprofile Profile sind, die von Dimensionsmerkmalen des Querschnitts des Blatts bestimmt sind.

6. Verfahren nach Anspruch 5, wobei, wobei das Blatt ein Kontaktelement (11) mit der Windschutzscheibe aufweist, das mittels eines Scharniers (12) mit einem Absatz (13) verbunden ist, die Dimensionsmerkmale das Kontaktelement (11) und/oder das Scharnier (12) und/oder den Absatz (13) betreffen.

7. Verfahren nach einem der Ansprüche 4 bis 6, wobei das kontinuierliche Anschlussgesetz ein lineares Gesetz ist.

8. Verfahren nach einem der Ansprüche 4 bis 6, wobei das kontinuierliche Anschlussgesetz ein Timoshenko-Gesetz, abgeleitet aus einem Modell eines Balkens auf einem elastischen Fundament, ist.

## Claims

1. Flat wiper blade comprising a central connector and a flexible structure comprising a metal rigidification rod and bearing a wiping blade, said blade being intended to be submitted to a bearing force against a windscreen of a vehicle, **characterised in that** said blade has a variable rigidity profile comprising a plurality of characteristic areas (Z₁, Z₂, Z₃, Z₄), said variable rigidity profile being in relation with the variations along the blade of the lineic force (F_{I}) which must be applied by the blade on said windscreen, one area (Z₁) being the one where the lineic force (F_{I}) has the greatest value, said area (Z₁) being located in the close vicinity of the central connector on which a bearing force developed by a driving arm can be exerted.

2. Flat wiper blade according to claim 1, wherein said variable rigidity profile is a variable section profile.

3. Flat wiper blade, according to claim 2, wherein, said blade comprising one element (11) of contact with said windscreen, connected to a foot (13) by a hinge (12), said variable section profile relates to dimensional characteristics of said contact element (11) and/or of said hinge (12) and/or of said foot (13).

4. Method for making a wiping blade for a wiper blade as defined in any of the preceding claims, **characterised in that** said method comprises one step of determining a variable rigidity profile consisting in:
- defining a plurality of characteristic areas (Z₁, Z₂, Z₃, Z₄) of variations along the blade of the lineic force (F_{I}) to be applied by said blade against said windscreen, one area (Z₁) being the one where the lineic force (F_{I}) has the greatest value, said area (Z₁) being located in the close vicinity of the central connector on which a bearing force developed by a driving arm can be exerted,
- determining a length for each characteristic area,
- establishing in each characteristic area a variation range of the lineic force (F_{I}),
- determining within each characteristic area, a reference profile of the blade having a rigidity at least partially compatible with said variation range,
- connecting the reference profiles of said characteristic areas (Z₁, Z₂, Z₃, Z₄) according to a continuous connection rule.

5. A method according to claim 4, wherein said reference profiles are profiles defined by dimensional characteristics of the section of the blade.

6. A method according to claim 5, wherein, said blade comprising an element (11) of contact with said windscreen, connected to a foot (13) by a hinge (12), said dimensional characteristics relating to said contact element (11) and/or of said hinge (12) and/or of said foot (13).

7. A method according to any one of claims 4 to 6, wherein said continuous connection rule is a linear rule.

8. A method according to any one of claims 4 to 6, wherein said continuous connection rule is Timoshenko's rule resulting from a model of beam on an elastic foundation.
